# EUROPÄISCHE PATENTSCHRIFT

(11) **EP 1 673 255 B1**
(45) Veröffentlichungstag und Bekanntmachung des Hinweises auf die Patenterteilung: **13.02.2008**
(21) Anmeldenummer: 04790437.0
(22) Anmeldetag: 15.10.2004
(51) Int. Cl.: B60N 2/015, B60N 2/36

(54) **VERRIEGELUNGSVORRICHTUNG FUR EINEN FAHRZEUGSITZ**
LOCKING DEVICE FOR A VEHICLE SEAT
DISPOSITIF DE VERROUILLAGE POUR SIEGE DE VEHICULE

(30) Priorität: 17.10.2003 DE 10348451
(43) Veröffentlichungstag der Anmeldung: 28.06.2006
(73) Patentinhaber: KEIPER GmbH & Co. KG, 67657 Kaiserslautern (DE)
(72) Erfinder: WROBEL, Darius, 55257 Budenheim (DE)
(74) Vertreter: Patentanwälte Hosenthien-Held und Dr. Held
(86) Internationale Anmeldenummer: PCT/EP2004/011581
(87) Internationale Veröffentlichungsnummer: WO 2005/037596

(56) Entgegenhaltungen:
- EP-A- 0 125 978
- EP-A- 0 952 288
- EP-A- 1 203 689
- DE-A1- 4 026 519
- DE-A1- 10 156 200
- DE-A1- 10 202 344
- DE-A1- 19 522 721
- DE-C1- 3 510 006
- DE-C1- 4 444 122
- FR-A- 2 803 562
- FR-A- 2 828 148
- FR-A- 2 828 149
- US-A- 4 765 682
- US-A- 5 762 401

## Beschreibung

Die Erfindung betrifft eine Verriegelungsvorrichtung für einen Fahrzeugsitz mit den Merkmalen des Oberbegriffs des Anspruches 1.

Mit einer bekannten Verriegelungsvorrichtung dieser Art wird eine schwenkbare Lehne einer Rücksitzanlage mit der Fahrzeugstruktur lösbar verriegelt. Eines der Verriegelungselemente ist als Bolzen oder Bügel ausgebildet, das andere Verriegelungselement ist als Klinke ausgebildet und zusammen mit den anderen Bauteilen der Verriegelungsvorrichtung in einem Schloß angeordnet. Wird das Sicherungselement von den Verriegelungselementen wegbewegt, um ein Entriegeln zu ermöglichen, müssen die Verriegelungselemente voneinander entfernt werden, d.h. das Schloß vom Bolzen oder Bügel weggeschwenkt werden oder umgekehrt, solange das Sicherungselement geöffnet gehalten wird. Wird nämlich das Sicherungselement losgelassen und verhindert beispielsweise das Gewicht der Lehne ein automatisches Schwenken und Austreten des Bolzens oder Bügels aus dem Schloß, könnte die Verriegelungsvorrichtung ungewollt wieder verriegeln.

Aus der DE 101 56 200 A1 ist eine Verriegelungsvorrichtung für einen Fahrzeugsitz entsprechend dem Oberbegriff des Anspruchs 1 bekannt.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, daß ein Sperrelement vorgesehen ist, welches das wegbewegte Sicherungselement sperrt, solange die Verriegelungselemente sich noch nicht voneinander entfernt haben, wird verhindert, daß nach einem Loslassen des Sicherungselements dieses seine Ausgangsposition wieder einnimmt, d.h. ein Öffnen der Verriegelungselemente verhindert wird. Mit der Aktivierung des erfindungsgemäßen Sperrelements können sich die Verriegelungselemente ungehindert voneinander entfernen. Sofern zwei Sicherungselemente vorgesehen sind, beispielsweise eines für den Normalfall und eines für den Crashfall, wird das für den Entriegelungsvorgang dominante Sicherungselement, in der Regel dasjenige für den Crashfall, vom Sperrelement gesperrt.

Das Sicherungselement ist vorzugsweise auf einem ersten Lagerbolzen schwenkbar gelagert und über einen zum Öffnen der Verriegelungselemente notwendigen Winkel hinaus schwenkbar, um einen gewissen Winkelbereich für die Aktivierung des Sperrelements zur Verfügung zu haben. Das Sperrelement ist beispielsweise schwenkbar auf dem Sicherungselement gelagert, um bei Aktivierung ausklappen und sich an einem Verriegelungselement oder einem Lagerbolzen desselben abstützen zu können. Ebenso ist es möglich, daß das Sperrelement anderweitig schwenkbar gelagert ist und zur Aktivierung so ausklappt, daß es sich am Sicherungselement abstützt.

Als Verriegelungselemente sind vorzugsweise eine auf einem zweiten Lagerbolzen schwenkbar gelagerte Klinke und ein Gegenelement vorgesehen, wobei das Gegenelement von den anderen, eine räumliche Einheit bildenden Bauteilen der Verriegelungsvorrichtung entfernbar ist. Das vom Sicherungselement mitgenommene Sperrelement gleitet während des Schwenkens des Sicherungselements vorzugsweise am zweiten Lagerbolzen entlang und stützt sich bei einem Winkel des Sicherungselements, der größer ist als der zum Öffnen der Verriegelungselemente notwendige Winkel vorzugsweise am zweiten Lagerbolzen flächig ab, um das Sicherungselement zu sperren.

Um diese Sperre wieder zu deaktivieren, nimmt die sich öffnende Klinke vorzugsweise das Sperrelement mit, beispielsweise mittels eines seitlich abstehenden Mitnehmers. Bei einem bestimmten Schwenkwinkel der Klinke, bei dem deren Schwenkbewegung so weit fortgeschritten ist, daß das Sicherungselemente keine Umkehr der Schwenkbewegung mehr bewirken und das Gegenelement sich bereits entfernen kann, ist vorzugsweise die Vorspannung des Sicherungselements größer als die Selbsthemmung des Sperrelements am zweiten Lagerbolzen, wodurch das Sperrelement einklappen und das Sicherungselement freigeben kann. Das freigegebene Sicherungselement schwenkt dann vorzugsweise zurück, beispielsweise zu dem zum Öffnen der Verriegelungselemente notwendigen Winkel, und liegt vorzugsweise an der Klinke an.

In einem Fahrzeugsitz kann die erfindungsgemäße Verriegelungsvorrichtung beispielsweise für ein Schloß verwendet werden, welches eine schwenkbare Lehne des Fahrzeugsitzes mit der Fahrzeugstruktur verriegelt. Ein solches Schloß mit erfindungsgemäßer Verriegelungsvorrichtung kann auch zur Befestigung des Fahrzeugsitzes am Fahrzeugboden verwendet werden. Die erfindungsgemäße Verriegelungsvorrichtung kann aber auch in anderen Beschlägen des Fahrzeugsitzes Verwendung finden.

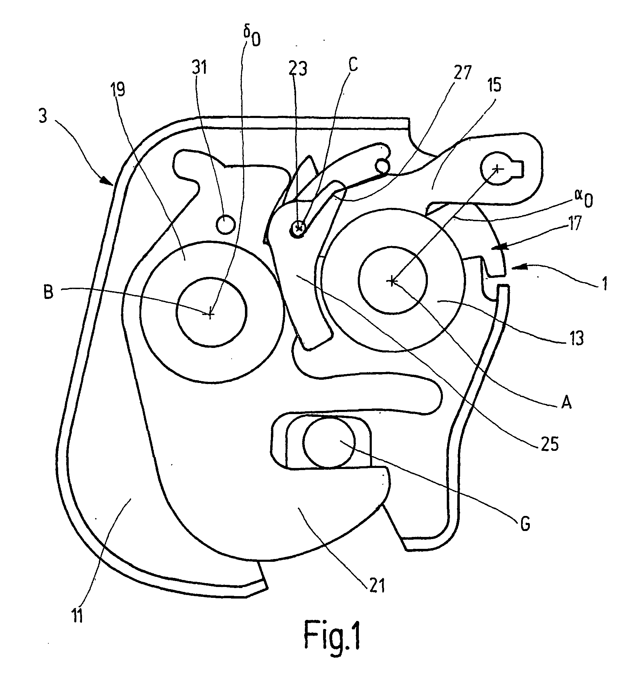

Im folgenden ist die Erfindung anhand eines in der Zeichnung dargestellten Ausführungsbeispiels näher erläutert. Es zeigen
- Fig. 1: eine teilweise geschnitten dargestellte Ansicht des Ausführungsbeispiels in der verriegelten Stellung,

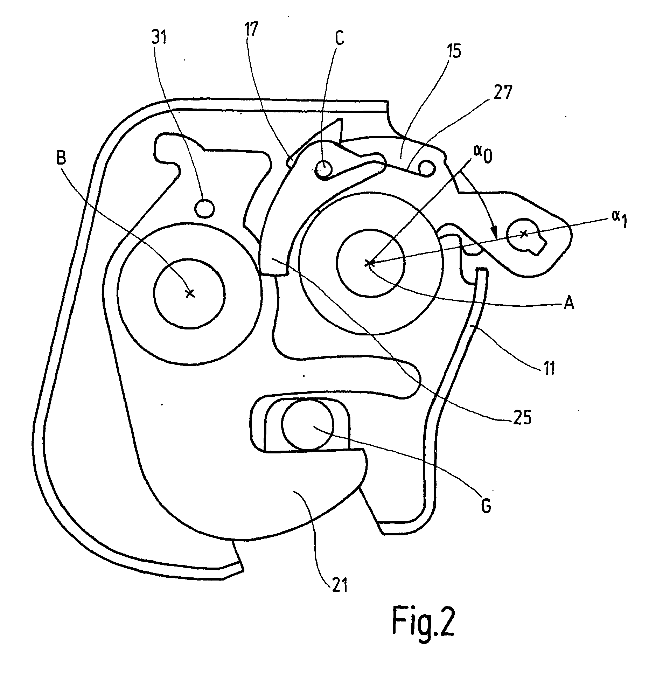

- Fig. 2: eine entsprechende Ansicht mit aufgeschwenktem Fangstück,

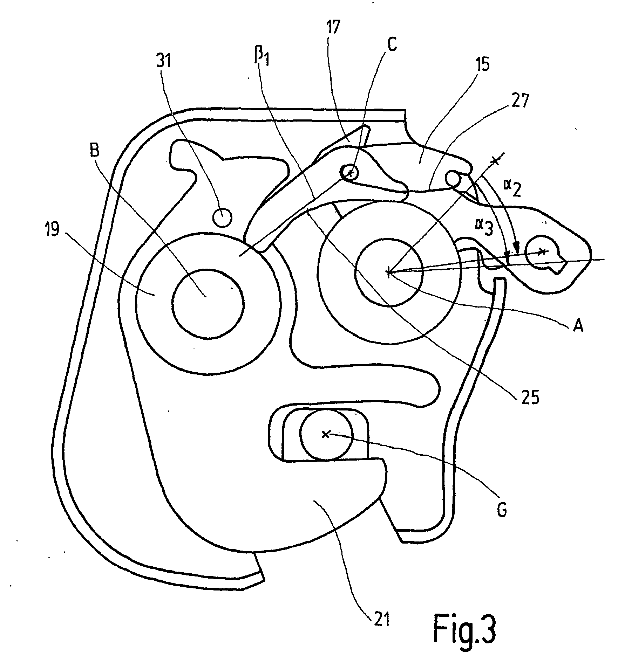

- Fig. 3: eine entsprechende Ansicht mit aktivierter Sperre,

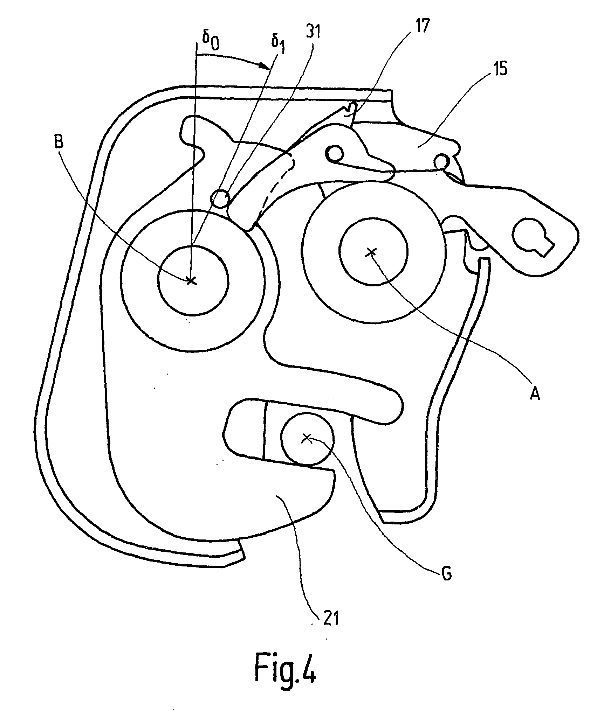

- Fig. 4: eine entsprechende Ansicht bei Kontaktierung der Sperre,

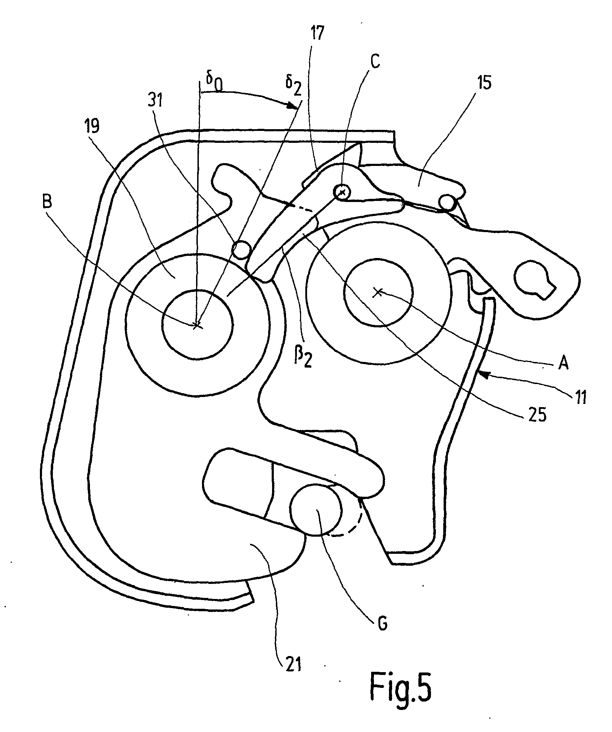

- Fig. 5: eine entsprechende Ansicht beim Öffnen der Sperre,

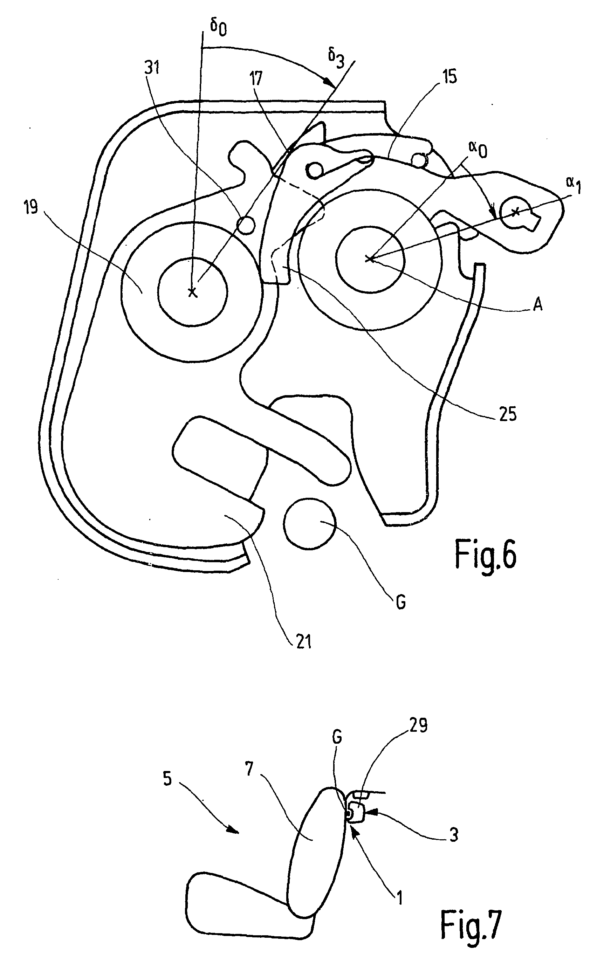

- Fig. 6: eine entsprechende Ansicht mit deaktivierter Sperre und freigegebenem Gegenelement, und
- Fig. 7: eine schematische Seitenansicht eines Fahrzeugsitzes.

Eine Verriegelungsvorrichtung 1 ist für ein Schloß 3 vorgesehen, mittels welchem bei einem Fahrzeugsitz 5 eines Kraftfahrzeuges, genauer gesagt einer Rücksitzanlage, die Lehne 7 mit der Fahrzeugstruktur des Kraftfahrzeuges lösbar verriegelt ist, um die Lehne 7 nach vorne klappen zu können. Hierzu wirkt das Schloß 3 mit einem Gegenelement G, beispielsweise einem Bolzen oder Bügel, zusammen, wobei entweder das Schloß 3 an der Fahrzeugstruktur und das Gegenelement G an der Lehne 7 oder das Schloß 3 an der Lehne 7 und das Gegenelement G an der Fahrzeugstruktur vorgesehen ist.

In einem Gehäuse 11 des Schlosses 3 sind auf einem eine erste Schwenkachse A definierenden ersten Lagerbolzen 13 ein Fangstück 15 und ein Spannexzenter 17 schwenkbar gelagert. Auf einem eine zweite Schwenkachse B definierenden zweiten Lagerbolzen 19 ist eine Klinke 21 schwenkbar gelagert, wobei die beiden Schwenkachsen A und B parallel zueinander sind. Das Fangstück 15 und der Spannexzenter 17 bilden Sicherungselemente der Verriegelungsvorrichtung 1, während die Klinke 21 und das Gegenelement G die Verriegelungselemente der Verriegelungsvorrichtung 1 bilden. In an sich bekannter Weise liegt im verriegelten Zustand der Verriegelungsvorrichtung im Normalfall der Spannexzenter 17 federbelastet an der Klinke 21 an, so daß diese in Eingriff mit dem Gegenelement G bleibt. Im Crashfall stützt das ebenfalls vorgespannte Fangstück 15 die Klinke 21 flächig ab, so daß diese nicht öffnet.

Auf einem am Fangstück 15 angeformten oder aus dem Material ausgestellten Lagerzapfen 23, welcher eine dritte Schwenkachse C definiert, ist ein Sperrelement 25 schwenkbar gelagert. Das Sperrelement 25 ist mittels einer Feder 27 an das Fangstück 15 gekoppelt und gegen den zweiten Lagerbolzen 19 vorgespannt.

Ausgehend vom verriegelten Zustand wird zum Öffnen der Verriegelungsvorrichtung 1 mittels eines Entriegelungsgriffs 29 das Fangstück 15 um die erste Schwenkachse A ausgehend von einem anfänglichen Winkel α₀ = 0° von der Klinke 21 weggeschwenkt, d.h. in der Zeichnung im Uhrzeigersinn. Der Spannexzenter 17 wird vom Fangstück 15 mitgenommen. Ab einem Winkel α₁ = 36° kann die Klinke 21 prinzipiell schwenken. Das Fangstück 15 und der Spannexzenter 17 können weiter aufschwenken bis zu einem Winkel α₃, bei dem die Schwenkbewegung durch einen nicht näher dargestellten Endanschlag begrenzt ist.

Bei einem Winkel α₂ zwischen α₁ und α₃ (ca. 39° bis 42°) hat das Fangstück 15 den Lagerzapfen 23 so weit mitgenommen, daß das bislang am zweiten Lagerbolzen 19 anliegende Sperrelement 25 durch die Vorspannung der Feder 27 voll aufschwenken kann, und zwar um einen Winkel β₁. Wird nun der Entriegelungsgriff 29 losgelassen, kann aufgrund der flächigen, nahezu radialen Abstützung des Sperrelements 25 am zweiten Lagerbolzen 19 das Fangstück 15 nicht zurückschwenken, d.h die Klinke 21 bleibt entriegelt und die Sperre des Fangstücks 15 ist aktiviert.

Die Klinke 21 kann nun ausgehend von einem Winkel δ₀ aufschwenken (öffnen), beispielsweise angetrieben durch eine Relativbewegung des Gegenelements G. Bei einem Öffnungswinkel δ₁ (ca. 10°) der Klinke 21 gelangt ein an der Klinke 21 angeformter Mitnehmer 31 in Anlage an das Sperrelement 25 und nimmt dieses mit. Mit der weiteren Schwenkbewegung der Klinke 21 wird die Abstützung des Fangstücks 15 auf dem zweiten Lagerbolzen 19 kontinuierlich verringert, so daß bei einem Winkel β₂ bzw. δ₂ (ca. 21 °) das Drehmoment des Spannexzenters 17 und Fangstücks 15 größer ist als die Selbsthemmung des Sperrelements 25 am zweiten Lagerbolzen 19. Das Fangstück 15 und der Spannexzenter 17 schwenken daraufhin zurück zum Winkel α₁, bei welchem jetzt aber das Fangstück 15 und der Spannexzenter 17 am oberen Ende der Klinke 21 aufliegen, ohne deren weitere Schwenkbewegung zu behindern oder umzukehren. Die Sperre des nunmehr freigegebenen Fangstücks 15 ist deaktiviert. Das Gegenelement G kann bei dieser Konstellation in seiner äußersten Position die Klinke 21 bereits verlassen.

Die Klinke 21 schwenkt weiter bis zum Winkel δ₃ (ca. 30°), welcher durch einen Anschlag am Gehäuse 11 definiert ist. Die Verriegelungsvorrichtung 1 ist entriegelt. Das Gegenelement G verläßt die Klinke 21. Eine nicht dargestellte Feder zwischen der Klinke 21 und dem Fangstück 15 hält die Klinke 21 geöffnet. Gelangt das Gegenelement G wieder in das Maul der Klinke 21, schwenkt die Klinke 21 zurück zu δ₀. Das Fangstück 15 und der Spannexzenter 17 schwenken von α₁ zurück zu α₀. Die Reibung zwischen dem Sperrelement 25 und dem zweiten Lagerbolzen 19 ist dabei vernachlässigbar.

### Bezugszeichenliste

- 1: Verriegelungsvorrichtung
- 3: Schloß
- 5: Fahrzeugsitz
- 7: Lehne
- 11: Gehäuse
- 13: erster Lagerbolzen
- 15: Fangstück, Sicherungselement
- 17: Spannexzenter, Sicherungselement
- 19: zweiter Lagerbolzen
- 21: Klinke, Verriegelungselement
- 23: Lagerzapfen
- 25: Sperrelement
- 27: Feder
- 29: Entriegelungsgriff
- 31: Mitnehmer
- A: erste Schwenkachse
- B: zweite Schwenkachse
- C: dritte Schwenkachse
- G: Gegenelement, Verriegelungselement
- α₀, α₁, α₂, α₃: Winkel des Fangstücks
- β₁, β₂: Winkel des Sperrelements
- δ₀, δ₁, δ₂, δ₃: Winkel der Klinke

## Patentansprüche

1. Verriegelungsvorrichtung (1) für einen Fahrzeugsitz (5), insbesondere für einen Kraftfahrzeugsitz, mit Verriegelungselementen (21, G), die zum Verriegeln der Verriegelungsvorrichtung (1) zusammenwirken und sich zum Entriegeln voneinander entfernen, und wenigstens einem Sicherungselement (15, 17), das die verriegelten Verriegelungselemente (21, G) gegen ein Öffnen sichert, wobei das Sicherungselement (15, 17) sich zum Entriegeln der Verriegelungsvorrichtung (1) von den Verriegelungselementen (21, G) wegbewegt, **dadurch gekennzeichnet, daß** ein Sperrelement (25) vorgesehen ist, welches das wegbewegte Sicherungselement (15, 17) sperrt, solange die Verriegelungselemente (21, G) sich noch nicht voneinander entfernt haben.

2. Verriegelungsvorrichtung nach Anspruch 1, **dadurch gekennzeichnet, daß** das Sicherungselement (15, 17) auf einem ersten Lagerbolzen (13) schwenkbar gelagert ist, wobei das Sicherungselement (15, 17) über einen zum Öffnen der Verriegelungselemente (21, G) notwendigen Winkel (α₁) hinaus schwenkbar ist.

3. Verriegelungsvorrichtung nach Anspruch 1 oder 2, **dadurch gekennzeichnet, daß** das Sperrelement (25) schwenkbar auf dem Sicherungselement (15) gelagert ist.

4. Verriegelungsvorrichtung nach einem der Ansprüche 1 bis 3, **dadurch gekennzeichnet, daß** als Verriegelungselemente (21, G) eine auf einem zweiten Lagerbolzen (19) schwenkbar gelagerte Klinke (21) und ein Gegenelement (G) vorgesehen sind.

5. Verriegelungsvorrichtung nach Anspruch 4, **dadurch gekennzeichnet, daß** das Sperrelement (25) sich während des Sperrens des Sicherungselements (15, 17) am zweiten Lagerbolzen (19) abstützt.

6. Verriegelungsvorrichtung nach Anspruch 2 und 5, **dadurch gekennzeichnet, daß** das Sperrelement (25) während des Schwenkens des Sicherungselements (15, 17) am zweiten Lagerbolzen (19) entlanggleitet und bei einem Winkel (α₂) des Sicherungselements (15, 17), der größer ist als der zum Öffnen der Verriegelungselemente (21, G) notwendige Winkel (α₁), sich flächig am zweiten Lagerbolzen (19) abstützt.

7. Verriegelungsvorrichtung nach einem der Ansprüche 4 bis 6, **dadurch gekennzeichnet, daß** die sich öffnende Klinke (21) das Sperrelement (25) mitnimmt.

8. Verriegelungsvorrichtung nach Anspruch 6 und 7, **dadurch gekennzeichnet, daß** bei einem Schwenkwinkel (δ₂) der Klinke die Vorspannung des Sicherungselements (15, 17) größer ist als die Selbsthemmung des Sperrelements (25) am zweiten Lagerbolzen (19), wodurch das Sperrelement (25) das Sicherungselement (15, 17) freigibt.

9. Verriegelungsvorrichtung nach Anspruch 2 und 8, **dadurch gekennzeichnet, daß** das freigegebene Sicherungselement (15, 17) zurück zu dem zum Öffnen der Verriegelungselemente (21, G) notwendigen Winkel (α₁) schwenkt und an der Klinke (21) anliegt.

10. Fahrzeugsitz mit einer schwenkbaren Lehne (7) und einer Verriegelungsvorrichtung (1) nach einem der Ansprüche 1 bis 9 für ein Schloß (3) zur Verriegelung der Lehne (7) mit der Fahrzeugstruktur.

## Claims

1. A locking device (1) for a vehicle seat (5), particularly for a motor vehicle seat, having locking elements (21, G) which interact in order to lock the locking device (1) and are moved away from one another to unlock it, and at least one securing element (15, 17) which ensures that the locked locking elements (21, G) do not open, the securing element (15, 17) being moved away from the locking elements (21, G) in order to unlock the locking device (1), **characterized in that** a blocking element (25) is provided which blocks the securing element (15, 17), which has been moved away, as long as the locking elements (21, G) are not moved away from one another.

2. The locking device as claimed in claim 1, **characterized in that** the securing element (15, 17) is pivotably mounted on a first bearing bolt (13), the securing element (15, 17) being pivotable beyond an angle (α₁) necessary for opening the locking elements (21, G).

3. The locking device as claimed in claim 1 or 2, **characterized in that** the blocking element (25) is pivotably mounted on the securing element (15).

4. The locking device as claimed in one of claims 1 to 3, **characterized in that** a pawl (21), which is pivotably mounted on a second bearing bolt (19), and a mating element (G) are provided as locking elements (21, G).

5. The locking device as claimed in claim 4, **characterized in that** the blocking element (25) is supported on the second bearing bolt (19) while the securing element (15, 17) is blocked.

6. The locking device as claimed in claims 2 and 5, **characterized in that** the blocking element (25) slides along the second bearing bolt (19) during the pivoting of the securing element (15, 17) and is supported plane on the second bearing bolt (19) at an angle (α₂) of the securing element (15, 17) which is greater than that necessary (α₁) for opening the locking elements (21, G).

7. The locking device as claimed in one of claims 4 to 6, **characterized in that** the opening pawl (21) takes along the blocking element (25).

8. The locking device as claimed in claims 6 and 7, **characterized in that** at a pivot angle (δ₂) of the pawl, the preload of the securing element (15, 17) is greater than the self-locking force of the blocking element (25) on the second bearing bolt (19), as a result of which the blocking element (25) unblocks the securing element (15, 17).

9. The locking device as claimed in claims 2 and 8, **characterized in that** the unblocked securing element (15, 17) pivots back to the angle (α₁) necessary for opening the locking elements (21, G) and rests against the pawl (21).

10. A vehicle seat having a pivotable back rest (7) and a locking device (1) as claimed in one of claims 1 to 9 for a lock (3) for locking the back rest (7) to the vehicle structure.

## Revendications

1. - Dispositif de verrouillage (1) pour un siège de véhicule (5), en particulier pour un siège de véhicule automobile, comportant des éléments de verrouillage (21, G) qui coopèrent pour le verrouillage du dispositif de verrouillage (1) et s'éloignent l'un de l'autre pour le déverrouillage, et au moins un élément de protection (15, 17) qui protège les éléments de verrouillage (21, G) verrouillés contre une ouverture, l'élément de protection (15, 17) s'éloignant des éléments de verrouillage (21, G) pour le déverrouillage du dispositif de verrouillage (1), **caractérisé par le fait qu'**un élément d'arrêt (25) est prévu, lequel arrête l'élément de protection (15, 17) éloigné aussi longtemps que les éléments de verrouillage (21, G) ne se sont pas encore éloignés l'un de l'autre.

2. - Dispositif de verrouillage selon la revendication 1, **caractérisé par le fait que** l'élément de protection (15, 17) est monté à pivotement sur un premier tourillon de palier (13), l'élément de protection (15, 17) étant apte à pivoter au-delà d'un angle (α₁) nécessaire pour l'ouverture des éléments de verrouillage (21, G).

3. - Dispositif de verrouillage selon l'une des revendications 1 ou 2, **caractérisé par le fait que** l'élément d'arrêt (25) est monté à pivotement sur l'élément de protection (15).

4. - Dispositif de verrouillage selon l'une des revendications 1 à 3, **caractérisé par le fait que**, comme élément de verrouillage (21, G), un cliquet (21) monté à pivotement sur un deuxième tourillon de palier (19) et un contre-élément (G) sont prévus.

5. - Dispositif de verrouillage selon la revendication 4, **caractérisé par le fait que** l'élément d'arrêt (25) s'appuie pendant la retenue de l'élément de protection (15, 17) sur le second tourillon de palier (19).

6. - Dispositif de verrouillage selon les revendications 2 et 5, **caractérisé par le fait que** l'élément d'arrêt (25) glisse pendant le pivotement de l'élément de protection (15, 17) le long du deuxième tourillon de palier (19) et pour un angle (α₂) de l'élément de protection (15, 17) qui est supérieur à l'angle (α₁) nécessaire pour l'ouverture des éléments de verrouillage (21, G), s'appuie à plat sur le deuxième tourillon de palier (19).

7. - Dispositif de verrouillage selon l'une des revendications 4 à 6, **caractérisé par le fait que** le cliquet (21) s'ouvrant entraîne l'élément d'arrêt (25).

8. - Dispositif de verrouillage selon les revendications 6 et 7, **caractérisé par le fait que**, pour un angle de pivotement (δ₂) du cliquet, la précontrainte de l'élément de protection (15, 17) est supérieure au blocage automatique de l'élément d'arrêt (25) sur le deuxième tourillon de palier (19), ce par quoi l'élément d'arrêt (25) libère l'élément de protection (15, 17).

9. - Dispositif de verrouillage selon les revendications 2 et 8, **caractérisé par le fait que** l'élément de protection (15, 17) libéré pivote en retour à l'angle (α₁) nécessaire pour l'ouverture des éléments de verrouillage (21, G) et s'appuie sur le cliquet (21).

10. - Siège de véhicule avec un dossier (7) apte à pivoter et un dispositif de verrouillage (1) tel que défini à l'une des revendications 1 à 9 pour un dispositif de fermeture (3) pour le verrouillage du dossier (7) avec la structure de véhicule.
